# EUROPEAN PATENT APPLICATION

(11) **EP 3 726 624 A1**
(43) Date of publication of application: **21.10.2020**
(21) Application number: 18888554.5
(22) Date of filing: 13.12.2018
(51) Int. Cl.: H01M 2/34

(54) **BATTERY SYSTEM AND ELECTRIC VEHICLE**

(30) Priority: 13.12.2017 CN 201711332873
(71) Applicant: BYD Company Limited, Shenzhen, Guangdong 518118 (CN)
(72) Inventor: LU, Zhipei, Shenzhen, Guangdong 518118 (CN); JIANG, Luxia, Shenzhen, Guangdong 518118 (CN)
(74) Representative: m patent group
(86) International application number: PCT/CN2018/120765
(87) International publication number: WO 2019/114774

(57) **Abstract**

A battery system and an electric vehicle are provided. The battery system includes at least one series circuit, at least one first battery pack being disposed in the series circuit, the first battery pack including at least two first cells connected in parallel, a current interrupt device, wherein the current interrupt device is disposed on the first cell being configured to interrupt an internal current of the first cell when the first cell is abnormal.

## Description

### FIELD

The present disclosure relates to the field of batteries, and relates to a battery system and an electric vehicle.

### BACKGROUND

As an energy storage unit, a battery has an important role in various industries. For example, a battery system composed of a plurality of cells is widely applied to a field such as a new energy vehicle, and the like. The battery system usually includes a series circuit, and a plurality of cells connected in series are disposed on the series circuit to implement charging and discharging. However, in the charging process of the battery system, a battery explosion is easily caused due to an abnormality such as overcharge of the cell.

In order to resolve the problem, in the related art, a current interrupt device is usually disposed in a corresponding cell of the series circuit. When there is an abnormality such as overcharge in the cell of series circuit, the current interrupt device is triggered to be turned on to cause an internal current of the cell to be interrupted, thereby achieving protection of the cell. However, when the current interrupt device is abnormally turned on, the entire series circuit may be caused to open.

### SUMMARY

An objective of the present disclosure is to provide a battery system and an electric vehicle, to reduce the risk of power failure of a series circuit due to abnormal turn-on of a current interrupt device.

In order to achieve the foregoing objective, the present disclosure provides a battery system, including at least one series circuit, wherein the series circuit comprisesat least one first battery pack, wherein the first battery pack includes at least two first cells connected in parallel, and a current interrupt device, wherein the current interrupt device is disposed on the first cell being configured to interrupt an internal current of the first cell when the first cell is abnormal.

In some embodiments, the series circuit further includes a second battery pack connected in series with the first battery pack, the second battery pack including a plurality of second cells in which the current interrupt apparatus is not disposed.

In some embodiments, the first cell includes a core and an electrode terminal, the electrode terminal being electrically connected to the core, the electrode terminal including an inner electrode terminal and an outer electrode terminal, and the inner electrode terminal being electrically connected to the core; the inner electrode terminal being electrically connected to the outer electrode terminal by using the current interrupt apparatus.

In some embodiments, the current interrupt apparatus includes: a score member electrically connected to the inner electrode terminal; and a flipping member electrically connected to the score member and the outer electrode terminal respectively and in gas communication with an interior of the first cell.

In some embodiments, the score member includes a score region in which a score is formed, a first welding region to be electrically connected to the flipping member, and a second welding region to be electrically connected to the inner electrode terminal, and the flipping member can act under the action of air pressure to break the score, the score being disposed around the first welding region, and at least one of the first welding region and the second welding region being disposed on a plane different from a plane on which the score is disposed.

In some embodiments, the score is disposed on a plane different from planes on which the first welding region and the second welding region are disposed.

In some embodiments, the score member includes a boss protruding from the score region, the first welding region being formed on the boss, and the score being formed on the score region and disposed around the boss.

In some embodiments, the first welding region is formed on an upper surface of the boss and parallel to the score region, and an annular welding joint is disposed at an outer periphery of the upper surface.

In some embodiments, a ring wall protruding in a direction the same as a direction in which the boss protrudes is formed at an outer periphery of the score region, the second welding region being formed at an outer periphery of the ring wall and being aligned with an upper edge of the boss in a height direction, and an outer wall of the ring wall being to be electrically connected to the inner electrode terminal.

In some embodiments, the second welding region, the score region, and the first welding region are sequentially arranged from outside to inside in a radial direction, and form, from the outside to the inside, a step structure gradually approaching the flipping member, and the score is disposed around the first welding region.

In some embodiments, a ring wall protruding in a direction opposite to a direction in which the boss protrudes is formed at the outer periphery of the score region, the second welding region being formed at an outer periphery of the ring wall and parallel to the score region, and an annular welding joint being formed at an outer periphery of the second welding region.

In some embodiments, a sidewall of the boss and the ring wall are perpendicular to the score region, respectively.

In some embodiments, the first welding region, the score region, and the second welding region respectively form a ring structure.

In some embodiments, a first connection region to be electrically connected to the score member and a second connection region to be electrically connected to the outer electrode terminal are formed on the flipping member, and a deformation cushion region is further formed on the flipping member, the deformation cushion region being disposed between the first connection region and the second connection region and around the first connection region.

In some embodiments, the flipping member is a sheet structure forming a cone, a smaller end of the cone forming the first connection region, and a larger end away from the score member forming the second connection region.

In some embodiments, the deformation cushion region forms an annular groove structure surrounding the first connection region.

In some embodiments, a radial cross-section of the annular groove structure is arc-shaped or angular.

The present disclosure further provides an electric vehicle, including the battery system provided in the present disclosure.

Through the foregoing technical solution, at least one first battery pack is disposed in the series circuit, the first battery pack including at least two first cells connected in parallel, and the current interrupt device being disposed on the first cell, which can reduce the risk of power failure of the entire series circuit due to the abnormal turn-on of a certain current interrupt device, so that an external control system based on the battery system has sufficient emergency time to perform related processing.

Other features and advantages of the present disclosure will be described in detail in the following specific implementations.

### BRIEF DESCRIPTION OF THE DRAWINGS

The accompanying drawings are used to provide a further understanding of the present disclosure, and constitute a part of the specification, which are used to explain the present disclosure in combination with the following specific implementations, and do not constitute a limitation to the present disclosure. In the accompanying drawings:
FIG. 1 is a schematic structural diagram of a battery system according to an exemplary implementation of the present disclosure, where a series circuit is in a normal working state.
FIG. 2 is a schematic structural diagram of a battery system according to an implementation of the present disclosure, where a series circuit is in an open state.
FIG. 3 is a schematic structural diagram of a battery system according to an implementation of the present disclosure, where a current interrupt device is abnormally started.
FIG. 4 is a cross-sectional view of a current interrupt device according to a first implementation of the present disclosure.
FIG. 5 is a cross-sectional view of a current interrupt device according to a second implementation of the present disclosure.
FIG. 6 is a three-dimensional schematic structural diagram of a score member according to a second implementation of the present disclosure.
FIG. 7 is a three-dimensional schematic structural diagram of a flipping member according to a first implementation of the present disclosure.

### DETAILED DESCRIPTION

The following describes the specific implementations of the present disclosure in detail with reference to the accompanying drawings. It should be understood that the specific implementations described herein are merely used to describe and explain the present disclosure, but are not intended to limit the present disclosure.

In the present disclosure, without the contrary explanation, the directional terms such as "upper, lower, left, and right" are usually defined based on the drawing direction of the corresponding accompanying drawings, and "inside and outside" refers to the inside and outside of the contour of the corresponding component.

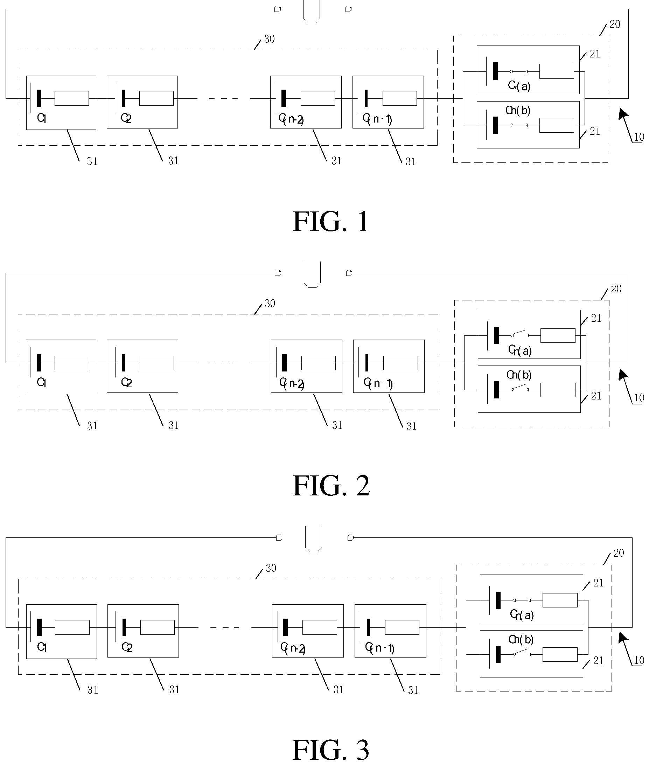

FIG 1 to FIG. 3 are each a schematic structural diagram of a battery system according to an implementation of the present disclosure. As shown in FIG. 1 to FIG. 3, the battery system includes at least one series circuit 10, and the series circuit 10 includes at least one first battery pack 20, the first battery pack 20 including at least two first cells 21 connected in parallel; the battery system further includes a current interrupt device , the current interrupt device is disposed on the first cell 21. The current interrupt device on the first cell 21 is configured to interrupt an internal current of the first cell 21 when the first cell 21 is abnormal.

In the present disclosure, a case that a cell is abnormal may include, for example, a dangerous state such as overcharge of the cell, thermal runaway caused by a short circuit of the cell during use, and the like.

In some embodiments of the present disclosure, the first cell 21 may have any appropriate structure. In some embodiments, the first cell 21 includes a core and an electrode terminal electrically connected to the core, the electrode terminal being used for input and output of currents. The current interrupt device may be disposed on the electrode terminal. When the first cell 21 is in a normal state, the current interrupt device does not work. In this case, an interior of the first cell 21 is in a conducting state, that is, the electrical connection between the core and the electrode terminal is normal, and the current may be input and output normally through the electrode terminal. When the first cell 21 is in an abnormal state, for example, when the cell 21 is overcharged, the current interrupt device is turned on, so that the core is electrically disconnected from the electrode terminal, thereby cutting off the current of the entire series circuit to prevent the battery from explosion due to further thermal runaway.

In addition, considering that in the field of power batteries, there is a greater demand for battery capacity, and a second battery pack 30 may further be disposed in the series circuit 10. The second battery pack 30 may include a plurality of second cells 31 without the current interrupt device, the plurality of second cells 31 being connected in series , or connected in parallel, or connected in series and in parallel . In FIG. 1 to FIG. 3, for example , there are a quantity (n-1) of second cells 31 are connected in series. The second cell 31 may also include a core and an electrode terminal electrically connected to the core. In some embodiments, the second battery pack 30 is connected in series with the first battery pack 20 to constitute the entire power battery. The second battery pack 30 is composed of second cells 31 without a current interrupt device, which serves as an energy storage element of the power battery. The first battery pack 20 is composed of first cells 21 which is provided with current interrupt device it is not only serves as an energy storage element of the power battery but also as a safety structure design that controls the entire circuit to be open and closed under extreme conditions. However, in the second battery pack 30, the second cells 31 may be connected in series to form the second battery pack 30, or may be connected in parallel or in a combination thereof to form the second battery pack 30.

In some embodiments, as shown in FIG. 1, when the first cell 21 is in a normal state, the current interrupt device disposed on the first cell 21 does not work. In this case, interiors of the first cells (cells Cn(a) and Cn(b)) are in a conducting state, that is, the electrical connection between the core and the electrode terminal is normal, and the current may be input and output normally through the electrode terminal. In this case, the entire series circuit 10 is in a normal working state, and can charge and discharge all the cells.

In some embodiments, as shown in FIG. 2, when an abnormality occurs in one or several batteries in the battery system, the current interrupt device provided on the first cell 21 is turned on. Therefore, the interiors of the first cells (cells Cn (a) and Cn (b)) are in disconnected states, and the current of the entire series circuit is cut off to prevent the battery from further thermal runaway.

In some embodiments, as shown in FIG. 3, when the current interrupt device (a current interrupt device on the cell Cn (b)) of one of the first cells 21 in the first battery pack 20 is turned on by mistake, the core of the first cell Cn (b) is electrically disconnected from the electrode terminal, so that the current output of the first cell is cut off. However, another first cell 21Cn (a) connected in parallel with the first cell is still in a normal working state, the entire series circuit 10 can still remain in the working state, and only the capacity is reduced. Therefore, a risk that the current interrupt device is abnormally turned on and the entire series circuit is cut off can be reduced, so that an external control system based on the battery system has sufficient emergency time for related processing.

It should be understood that in FIG. 1 to FIG. 3, the battery system includes a series circuit, the series circuit being provided with a first battery pack 20, and the first battery pack 20 including two first cells 21 connected in parallel, for example. In order to further reduce a probability that the current interrupt device is started abnormally and the battery system is powered off, first cells connected in parallel may further be added to the first battery pack, and current interrupt devices are disposed on the added first cells, the first battery pack may also be added to the series circuit, the series circuit is added to the entire battery system.

In some embodiments, of the present disclosure, the current interrupt device may be a mechanical structure for sensing air pressure. In some embodiments, the current interrupt device is in gas communication with an interior of a cell and can interrupt an internal current of the cell under the action of the air pressure. In some embodiments, current transfer can be interrupted by disconnecting internal components, thereby cutting off charging and discharging of the cell in time. A source of the used air pressure is as follows. When the cell is in an abnormal state such as overcharging, gas is generated inside the cell, resulting in an increase of the air pressure inside the housing, or when a temperature rises due to an abnormality during use of the cell, the air pressure inside the cell increases, resulting in pneumatic power that drives the current interrupt device.

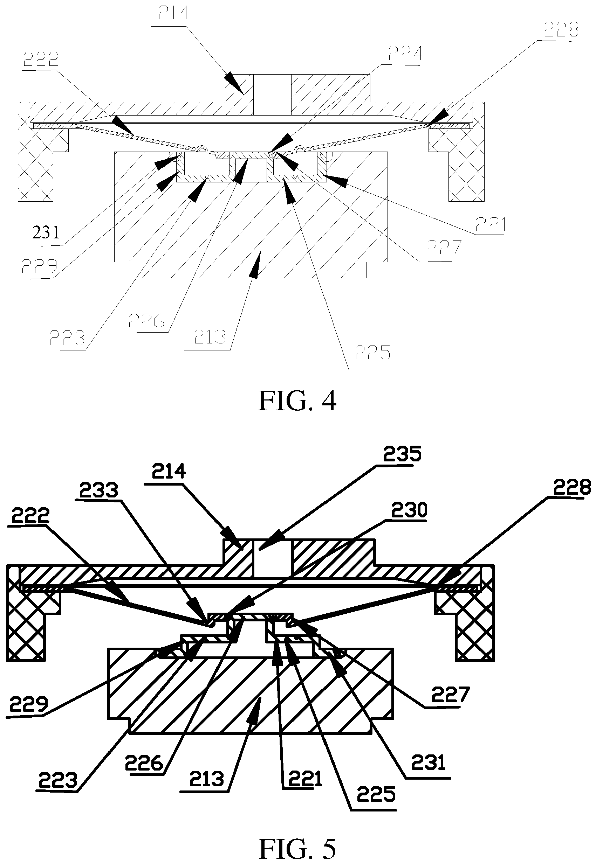

In some embodiments, as shown in FIG. 4 and FIG. 5. The first cell 21 includes a core and an electrode terminal, and the electrode terminal may include an inner electrode terminal 213 and an outer electrode terminal 214. The inner electrode terminal 213 is electrically connected to the core, and the inner electrode terminal 213 and the outer electrode terminal 214 are electrically connected by using the current interrupt device. The current interrupt device controls the current input and output of the electrode terminal by controlling the electrical connection between the inner electrode terminal 213 and the outer electrode terminal 214, thereby implementing the protection of the entire series circuit when the first cell is abnormal.

In some embodiments, the current interrupt device includes a score member 221 and a flipping member 222. The score member 221 is electrically connected to the inner electrode terminal 213, the flipping member 222 is electrically connected to the score member 221 and the outer electrode terminal 214, respectively, and the flipping member 222 is in gas communication with an interior of the cell 21 to flip under the action of air pressure, and is electrically disconnected from the score member 221. In some embodiments of the present disclosure, you could disconnect at least one of the flipping member and the score member. For example, by machining a score notch on the corresponding part to disconnect electrical connection.. In some embodiments, a score notch 223 may be disposed on the score member 221. In other words, under internal pressure, the score notch 223 may be broken through a flipping the flipping member 222, so that the flipping member can be electrically disconnected from the score member, thereby interrupting the current transfer.

Considering that, for example, in the field of power batteries, there is a relatively large current to pass, it is to be ensured that a welding structure of the score member 221 and the flipping member 222 are stable to prevent the large current from fusing the welding structure. In this way, the score member 221 and the flipping member 222 can be completely disconnected by disposing the score notch 223 on the score member 221, that is, by processing a weak portion with strength less than that of other regions in the corresponding part. The score is usually disposed around the welding region of the score member and the flipping member, to ensure complete disconnection of the score member from the flipping member.

The score member 221 and the flipping member 222 of a current interrupt device in the two implementations of the present disclosure are described below with reference to FIG. 4 and FIG. 5.

In some embodiments, as shown in FIG. 4, the current interrupt device in the present disclosure includes a score member 221 and a flipping member 222. The score member 221 includes a score region 225 on which a score notch 223 is formed, a first welding region 224 to be electrically connected to the flipping member 222, and a second welding region 231 to be electrically connected to the inner electrode terminal 213. The flipping member 222 can act under the air pressure to break the score notch 223 to be electrically disconnected from the score member 221. After the flipping member 222 breaks the score 221, the flipping member 222 is electrically disconnected from the second welding region 231 and is further electrically disconnected from an inner electrode terminal 213. The score notch 223 is disposed around the first welding region 224, and the score notch 223 may be a ring surrounding the first welding region 224. In addition, at least one of the first welding region 224 and the second welding region 231 is disposed on a plane different from a plane on which the score notch 223 is disposed. In other words, the score notch 223 and the at least one of the first welding region 224 and the second welding region 231 are not on the same plane, so that not only mechanical impact on the score notch 223 on the score member 222 caused by an external force from the flipping member 221 can be effectively eliminated, but also thermal effects of a welding stress in the first welding region on a region in which the score notch 223 is located can be eliminated. Therefore, reliability of the current interrupt device provided in the present disclosure is improved. The score notch 223 surrounding the first welding region 224 can be broken under the air pressure inside the cell. In this case, the flipping member 222 is electrically disconnected from the score member 221 to interrupt the current.

In some embodiments, as shown in FIG. 4, FIG. 5, and FIG. 6, the score notch 223 is disposed on a plane different from planes of both the first welding region 224 and the second welding region 231. In some embodiments, the second welding region 231, the score region 225, and the first welding region 224 are sequentially arranged from outside to inside in a radial direction, and form, from the outside to the inside, a step structure gradually approaching the flipping member 222. The second welding region 231 and the score region 225 are also located on different planes. The step structure formed by the three has a cushion effect, so that the thermal effect of the welding stress of the two welding regions on the score notch 223 can be avoided, and an external force transmitted from the inner electrode terminal can also be cushioned, making the current interrupt device more reliable.

In some embodiments, in some embodiments of this application, as shown in FIG. 4 and FIG. 5, the score member 221 includes a score region 225 and a boss 226 protruding from the score region 225. The first welding region 224 is formed on the boss 226, and the score notch 223 is formed on the score region 225 and disposed around the boss 226. In this way, the score and the first welding region are disposed on different planes. In some embodiments, the first welding region 224 is formed on an upper surface of the boss 226 and is parallel to the score region 225, and an annular welding joint is disposed at an outer periphery of the upper surface. Correspondingly, a first connection region 227 to be electrically connected to the score member 221 and a second connection region 228 to be electrically connected to the outer electrode terminal 214 are formed on the flipping member 222. The first connection region 227 may be formed into a connecting hole for accommodating the boss 226. Therefore, the outer periphery of the boss 226 and an inner sidewall of the connecting hole are firmly welded through the annular welding region. The boss 226 may be a cylindrical structure or may have a through-hole structure in an axial direction of the cylindrical structure. In other implementations, the score and the first welding region may be further disposed on different planes by using various convex or concave structures.

Further, as shown in FIG. 4, in some embodiments, in order to establish an electrical connection to the inner electrode terminal 213 of the cell, an accommodating groove is usually disposed on the top end of the inner electrode terminal 213. Accordingly, a ring wall 229 protruding in a direction the same as a direction in which the boss 226 protrudes is formed at an outer periphery of the score region 225, an upper edge of the ring wall 229 being aligned with an upper edge of the boss 226 in a height direction. In addition, an upper edge of an outer wall of the ring wall 229 is to be electrically connected to the inner electrode terminal 213 of the cell to form the second welding region, which matches a shape of a groove wall of the accommodating groove of the inner electrode terminal 213 and is welded through the annular welding joint. In this implementation, the score member 221 can be completely accommodated in the accommodating groove of the inner electrode terminal 213, so that a stable structure is formed.

In some embodiments, as shown in FIG. 5, further, as shown in FIG. 5, an accommodating groove is still disposed on the inner electrode terminal 213, the boss 226 of the score member 221 extending out of the accommodating groove. In some embodiments, a ring wall 229 protruding in a direction opposite to the direction in which the boss 226 protrudes is formed at the outer periphery of the score region 225, and the second welding region 231 is formed at an outer periphery of the ring wall 229 and is parallel to the score region 225, so that the score member 221 is formed into the step structure. An annular welding joint to be electrically connected to the inner electrode terminal 213 of the battery is formed at an outer periphery of the second welding region 231. In some embodiments, a lower surface of the second welding region 231 may be placed on the bottom wall of the accommodating groove, and the outer periphery and a sidewall of the accommodating groove are welded through the annular welding joint, so that a stable structure is also formed. In other words, in the second implementation, the first welding region 224, the score region 225, and the second welding region 231 are disposed on different planes.

In addition, in the second implementation, as shown in FIG. 5, a sidewall of the boss 226 and the ring wall 229 are perpendicular to the score region 225, respectively. In other implementations, there may be a specific angle, for example, a Z-shaped step is formed. The first welding region 224, the score region 225, and the second welding region 231 may each be a ring structure, that is, the first welding region 224 has a central hole. In other implementations, the first welding region 224 may have no central hole.

The score member 221 of the current interrupt device in the two implementations is described above, and the flipping member 222 in the current interrupt device in the two implementations is described below.

As shown in FIG. 4, FIG. 5, and FIG. 7, a first connection region 227 to be electrically connected to the score member 221 and a second connection region 228 to be electrically connected to an outer electrode terminal 214 of a battery are formed on the flipping member 222 of the current interrupt device of this application. In addition, a deformation cushion region 233 is further formed on the flipping member 222, the deformation cushion region 233 being disposed between the first connection region 227 and the second connection region 228 and around the first connection region 227. A deformation cushion region means that under the action of an external force, the region may deform before the flipping member 222, the first connection region 227, the second connection region 228, and the score member 221, thereby cushioning the external force and then reducing the impact of the external force on the first connection region 227 and the score notch 223 on the score member 221, so that the reliability of the current interrupt device 22 is improved.

In some embodiments of the present disclosure, the flipping member 222 is a sheet structure forming a cone, a smaller end of the cone forming the first connection region 227, and a larger end away from the score member 221 forming the second connection region 228. The cone structure may be used to dispose the two connection regions on different planes and provide a space for the flipping member 222 to flip upward under a force to break the score notch 223. In other possible implementations, the flipping member 222 may further be an elastic flat member, and the like.

As shown in FIG. 4 and FIG. 5, the deformation cushion region 233 in the present disclosure forms an annular groove structure surrounding the first connection region 227. In this way, an effect of cushioning through deformation can be achieved through relative movement between groove walls of the annular groove under the action of an external force. In other possible implementations, the deformation cushion region 233 may further be implemented by using a structure such as a deformation chamber or an elastic material.

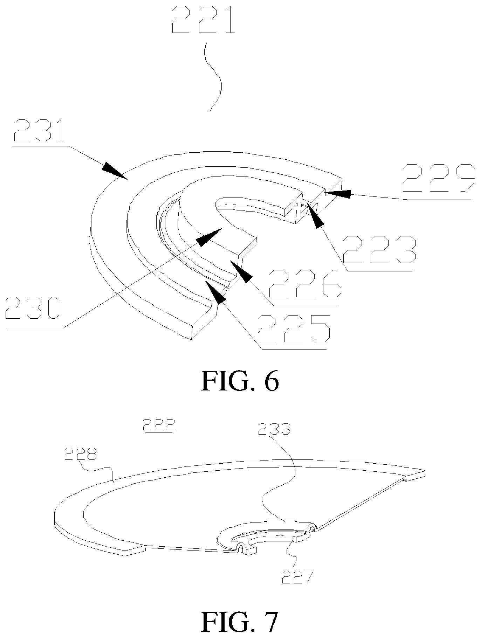

As shown in FIG. 4 and FIG. 7, in the first implementation, a radial cross-section of the annular groove structure is arc-shaped, for example, a semicircle protruding toward the outer electrode terminal 214. In this way, an external force transmitted from the second connection region 228 can be absorbed through the deformation of the arc-shaped groove wall, thereby reducing impact on the first connection region 227 and the score member 221.

As shown in FIG. 5, in the second implementation, the radial cross-section of the annular groove structure may further be angular, so that both sides of the angular shape are two groove walls and can also be deformed under the action of external force. In some embodiments, in the second implementation, the boss 226 of the score member 221 protrudes from the accommodating groove of the inner electrode terminal 213. In this case, in order to save space, the angular ring-shaped groove may be designed to protrude facing the score member 221, and the bottom of the groove is formed on one side of the boss, so that the entire flipping member 222 can be formed into a Z-shaped structure to achieve cushioning of the external force.

As shown in FIG. 4 and FIG. 5, in some embodiments of the present disclosure, in order to enable the flipping member 222 to act normally, the outer electrode terminal 222 forms a cap structure and may have a through hole 235 for discharging gas during acting of the flipping member 222, thereby preventing the action of the flipping member under the action of air pressure.

The first cell provided in the present disclosure further includes a housing, the core being accommodated in the housing. The first cell further includes a cover plate assembly that encapsulates the housing, where the inner electrode terminal is electrically connected to the core, and the flipping member is in gas communication with an interior of the housing. The cover plate assembly includes a cover plate, an inner electrode terminal 213 located at an inner side of the cover plate, and an outer electrode terminal 214 located at an outer side of the cover plate. The inner electrode terminal 213 and the outer electrode terminal 214 are electrically connected by using the foregoing current interrupt device. The outer electrode terminal 214 is electrically connected to the flipping member 222, and the score member 221 is electrically connected to the inner electrode terminal 213.

The inner electrode terminal 213 is welded to an inner lead-out member electrically connected to a core. In some embodiments, a welding hole may be formed on the inner lead-out member. The inner electrode terminal 213 forms a columnar structure and is embedded in the welding hole to be welded to the inner lead-out member. In order to prevent the cover plate from being energized, a cover plate insulating member is disposed between the cover plate and the inner lead-out member, and the inner electrode terminal may pass through the cover plate insulating member with a gap to be welded to the score member. In order to ensure sealing performance, a support ring is further included. A lower end of the support ring is welded to the cover plate. A ceramic material may be used to ensure the insulation of the current interrupt device and the cover plate. A duct is formed on the cover plate to facilitate mounting of the current interrupt device. In addition, in order to ensure that the gas inside the battery can act on the flipping member 222, an air hole is formed on the inner lead-out member, so that the gas can act on the flipping member 222 through the air hole.

A battery system is provided, including at least one series circuit, at least one first battery pack being disposed in the series circuit, the first battery pack including at least two first cells connected in parallel, and a current interrupt device being disposed on the first cell. The current interrupt device in the first cell is configured to interrupt an internal current of the first cell when the first cell is abnormal.

In some embodiments, the series circuit further includes a second battery pack connected in series with the first battery pack, the second battery pack including a plurality of second cells in which the current interrupt device is not disposed. When at least one of the second cells is abnormal, the current interrupt device of each of the first cells in the first battery pack is turned on to cut off the series circuit.

In some embodiments, the first cell includes a core and an electrode terminal, the electrode terminal being electrically connected to the core, the electrode terminal including an inner electrode terminal and an outer electrode terminal, and the inner electrode terminal being electrically connected to the core; the inner electrode terminal being electrically connected to the outer electrode terminal by using the current interrupt device.

In some embodiments, the current interrupt device includes: a score member electrically connected to the inner electrode terminal; and a flipping member electrically connected to the score member and the outer electrode terminal respectively and in gas communication with an interior of the first cell.

In some embodiments, the score member includes a score region in which a score is formed, a first welding region to be electrically connected to the flipping member, and a second welding region to be electrically connected to the inner electrode terminal. The flipping member can act under the action of air pressure to break the score, and the flipping member may be disconnected from the inner electrode terminal after breaking the score, the score being disposed around the first welding region, and at least one of the first welding region and the second welding region being disposed on a plane different from a plane on which the score is disposed.

In some embodiments, the score is disposed on a plane different from planes on which the first welding region and the second welding region are disposed.

In some embodiments, the score member includes a boss protruding from the score region, the first welding region being formed on the boss, and the score being formed on the score region and disposed around the boss.

In some embodiments, the first welding region is formed on an upper surface of the boss and parallel to the score region, and an annular welding joint is disposed at an outer periphery of the upper surface.

In some embodiments, a ring wall protruding in a direction the same as a direction in which the boss protrudes is formed at an outer periphery of the score region, the second welding region being formed at an outer periphery of the ring wall and being aligned with an upper edge of the boss in a height direction, and an outer wall of the ring wall being to be electrically connected to the inner electrode terminal.

In some embodiments, the second welding region, the score region, and the first welding region are sequentially arranged from outside to inside in a radial direction, and form, from the outside to the inside, a step structure gradually approaching the flipping member, and the score is disposed around the first welding region.

In some embodiments, a ring wall protruding in a direction opposite to a direction in which the boss protrudes is formed at the outer periphery of the score region, the second welding region being formed at an outer periphery of the ring wall and parallel to the score region, and an annular welding joint being formed at an outer periphery of the second welding region.

In some embodiments, a sidewall of the boss and the ring wall are perpendicular to the score region, respectively.

In some embodiments, the first welding region, the score region, and the second welding region respectively form a ring structure.

In some embodiments, a first connection region to be electrically connected to the score member and a second connection region to be electrically connected to the outer electrode terminal are formed on the flipping member, and a deformation cushion region is further formed on the flipping member, the deformation cushion region being disposed between the first connection region and the second connection region and around the first connection region.

In some embodiments, the flipping member is a sheet structure forming a cone, a smaller end of the cone forming the first connection region, and a larger end away from the score member forming the second connection region.

In some embodiments, the deformation cushion region forms an annular groove structure surrounding the first connection region.

Correspondingly, the present disclosure further provides an electric vehicle, including the foregoing battery system.

Some embodiments of the present disclosure are described above in detail with reference to the accompanying drawings, but the present disclosure is not limited to the specific details in the above implementations. Various simple variations may be made to the technical solutions of the present disclosure within the scope of the technical idea of the present disclosure, and such simple variations shall all fall within the protection scope of the present disclosure.

It should be further noted that the specific technical features described in the above specific embodiments may be combined in any suitable manner without contradiction. To avoid unnecessary repetition, various possible combinations are not further described in the present disclosure.

In addition, the various embodiments of the present disclosure may be combined without departing from the idea of the present disclosure, and such combinations shall also fall within the scope of the present disclosure.

## Claims

1. A battery system, comprising: at least one series circuit, at least one first battery pack being disposed in the series circuit, the first battery pack comprising :
at least two first cells connected in parallel and
a current interrupt device, disposed on the first cell;
the current interrupt apparatus in the first cell being and configured to interrupt an internal current of the first cell when the first cell is abnormal.

2. The battery system according to claim 1, wherein the series circuit further comprises a second battery pack connected in series with the first battery pack, the second battery pack comprising a plurality of second cells without the current interrupt device.

3. The battery system according to claim 1 or 2, wherein the first cell comprises a core and an electrode terminal, the electrode terminal being electrically connected to the core, and the electrode terminal comprises an inner electrode terminal and an outer electrode terminal, the inner electrode terminal being electrically connected to the core; and the inner electrode terminal and the outer electrode terminal are electrically connected by the current interrupt device.

4. The battery system according to claim 3, wherein the current interrupt device comprises:
a score member electrically connected to the inner electrode terminal; and
a flipping member electrically connected to the score member and the outer electrode terminal respectively, wherein the flipping member is in gas communication with an interior of the first cell.

5. The battery system according to claim 4, wherein the score member comprises a score region having a score notch, a first welding region electrically connected to the flipping member, and
a second welding region electrically connected to the inner electrode terminal, and wherein the flipping member acts under an effect of air pressure to break the score notch, the score notch is disposed around the first welding region, and at least one of the first welding region and the second welding region is disposed on a plane different from a plane on which the score notch is disposed.

6. The battery system according to claim 5, wherein the score notch is disposed on a plane different from planes on which the first welding region and the second welding region are disposed.

7. The battery system according to claim 6, wherein the score member comprises a boss protruding from the score region, the first welding region is formed on the boss, and the score is formed on the score region and disposed around the boss.

8. The battery system according to claim 7, wherein the first welding region is formed on an upper surface of the boss and parallel to the score region, and an annular welding joint is disposed at an outer periphery of the upper surface.

9. The battery system according to claim 8, wherein a ring wall protruding in a direction the same as a direction in which the boss protrudes is formed at an outer periphery of the score region, the second welding region is formed at an outer periphery of the ring wall and aligned with an upper edge of the boss in a height direction, and an outer wall of the ring wall is electrically connected to the inner electrode terminal.

10. The battery system according to any of claims 5 to 8, wherein the second welding region, the score region, and the first welding region are sequentially arranged from outside to inside in a radial direction, and form, from the outside to the inside, a step structure gradually approaching the flipping member, and the score is disposed around the first welding region.

11. The battery system according to claim 10, wherein a ring wall protruding in a direction opposite to the direction in which the boss protrudes is formed at the outer periphery of the score region, the second welding region is formed at an outer periphery of the ring wall and parallel to the score region, and an annular welding joint is formed at an outer periphery of the second welding region.

12. The battery system according to claim 11, wherein a sidewall of the boss and the ring wall are respectively perpendicular to the score region.

13. The battery system according to any of claims 5 to 12, wherein the first welding region, the score region, and the second welding region are respectively formed into a ring structure.

14. The battery system according to any of claims 4 to 13, wherein the flipping member comprises:
a first connection region electrically connected to the score member,
a second connection region electrically connected to the outer electrode terminal, and
a deformation cushion region disposed between the first connection region and the second connection region and around the first connection region.

15. The battery system according to claim 14, wherein the flipping member is a sheet structure forming a cone, a smaller end of the cone is configured to be the first connection region, and a larger end of the cone is away from the score member and is configured to be the second connection region.

16. The battery system according to claim 14 or 15, wherein the deformation cushion region comprises an annular groove structure surrounding the first connection region.

17. The battery system according to claim 16, wherein a radial cross-section of the annular groove structure is arc-shaped or angular.

18. An electric vehicle, comprising: the battery system according to any of claims 1 to 17.
